# EUROPÄISCHE PATENTSCHRIFT

(11) **EP 0 904 885 B1**
(45) Veröffentlichungstag und Bekanntmachung des Hinweises auf die Patenterteilung: **22.10.2003**
(21) Anmeldenummer: 98810891.6
(22) Anmeldetag: 08.09.1998
(51) Int. Cl.: B23K 20/02, B23K 20/24

(54) **Verfahren zum Schweissen von aushärtbaren Nickel-Basis-Legierungen**
Method for hardening nickel alloy welding
Méthode de soudage d'alliages de nickel durcissables

(30) Priorität: 22.09.1997 DE 19741637
(43) Veröffentlichungstag der Anmeldung: 31.03.1999
(73) Patentinhaber: ALSTOM (Switzerland) Ltd, 5401 Baden (CH)
(72) Erfinder: Balbach, Werner, Dr., 5303 Würenlingen (CH); Keller, Sorin, 5452 Oberrohrdorf (CH); Redecker, Reiner, 79801 Hohentengen (DE)

(56) Entgegenhaltungen:
- DE-A- 2 805 233
- DE-A- 3 015 638
- FR-A- 2 595 280

## Beschreibung

Die Erfindung geht aus von einem Verfahren zum Schweissen von aushärtbaren Nickel-Basis-Legierungen nach dem Oberbegriff des Anspruches (siehe, zum Beispiel, DE-OS-30 15 638).

### Stand der Technik

Nickel-Basis-Legierungen enthalten neben Cr vor allem Co, Mo und W zur Erhöhung der Festigkeit des Mischkristalls und üblicherweise Ti und Al zur Bildung kriechbehindemder Ausscheidungen in Form intermetallischer Phasen (γ'-Phase), die diese Legierungen aushärtbar machen. Ausserdem werden vielfach kleine Mengen an seltenen Erden wie Cer, Hafnium, Zirkon und Yttrium wegen ihres korrosionshemmenden Einflusses zugesetzt.

Aushärtbare Nickel-Basis-Legierungen gelten als schwer schweissbar und neigen zu Rissen in der Wärmeeinflusszone, besonders aber im Schweissgut. Aus diesem Grunde werden solche Legierungen nur an unkritischen Stellen mit "gutmütigen" Ni-Basis-Legierungen, wie beispielsweise IN625, die nicht die hohe Festigkeit des Grundwerkstoffes aufweisen, geschweisst. Dadurch weisen derart geschweisste Werkstücke maximal die Festigkeit der "gutmütigen" Ni-Basis-Legierung auf.

So müssen Feingussteile aus aushärbaren Ni-Basis-Legierungen, wie beispielsweise IN738LC, bei Gussfehlem wie Einschlüssen, Porennestern, usw. verschrottet werden, da diese Fehler durch Schweissen nicht ausgebessert werden können, weil nach dem obigen Verfahren geschweisste Feingussteile ungenügende Werkstoffeigenschaften aufweisen würden.

Aus DE-A-30 15 638 ist ein Verfahren zur Verbesserung der physikalischen Eigenschaften wärmegeschädigter Zonen von Schweissungen von Legierungen auf Nickelbasis bekannt. Dazu wird der geschweisste Körper aufgeheizt und ein isostatischer Druck ausgeübt, wodurch das Material plastisch verformt, die Porosität reduziert und die wärmegeschädigte Zone homogenisiert wird. Der Körper wird dabei in einer inerten oder sauerstofffreien Atmosphäre erhitzt. Die Schweissung erfolgt artgleich. Der Nachteil dieses Verfahrens besteht darin, nur der Teil der Risse und Poren, der nicht mit der Oberfläche in Verbindung steht, durch die beschriebenen Behandlung verschlossen wird. Das ist in der Regel für die Funktion des Bauteiles ungenügend.

### Darstellung der Erfindung

Der Erfindung liegt die Aufgabe zugrunde, bei einem Verfahren zum Schweissen von aushärtbaren Nickel-Basis-Legierungen der eingangs genannten Art durch das Schweissen ein Schweissgut zu erzeugen, das zumindest annähernd die gleichen Eigenschaften wie das Grundmaterial aufweist.

Erfindungsgemäss wird dies durch die Merkmale des Anspruches (siehe, zum Beispiel, DE-OS-30 15 638) erreicht.

Kern der Erfindung ist es also, dass ein Werkstück aus einer aushärtbaren Nickel-Basis-Legierung mit artgleichem Zusatzmaterial geschweisst wird, dass das dabei entstandene Schweissgut durch eine dichte Deckschicht aus einem duktilen Material abgedeckt wird und dass das Werkstück heissisostatisch gepresst wird, wobei als Deckschicht entweder eine geschweisste Decklage aus einer duktilen Nickel-Basis-Legierung oder ein Lotauftrag bzw. ein Auftrag durch thermisches Spritzen aufgebracht wird.

Die Vorteile der Erfindung sind unter anderem darin zu sehen, dass das Schweissgut bezüglich seiner Mikrostruktur und seiner mechanischen Eigenschaften dem Grundmaterial des Werkstückes entspricht. Durch das Heiss-Isostatisch-Pressen, bzw. Hipen werden Risse und Poren des Schweissgutes geschlossen, wodurch die Eigenschaften des Grundmateriales erreicht werden können.

Der Vorteil der dichten duktilen Deckschicht, die als Decklage aufgeschweisst wird oder ein Lotauftrag bzw. eine thermische Spritzschicht ist, besteht darin, dass diese im wesentlichen rissfrei aufgebracht werden kann. Spannungen bauen sich ab und führen nicht zur Rissbildung. Die Risse im darunterliegenden artgleichen, hochfesten und wenig duktilen Schweissgut sind daher abgeschlossen. Beim Hipen können diese nun, da sie nicht mehr mit der Oberfläche verbunden und daher dem Prozessgas nicht mehr zugänglich sind, ausgeheilt werden.

Durch dieses Verfahren können Feingussteile aus aushärtbaren Nickel-Basis-Legierungen repariert oder verbindungsgeschweisst werden. Dadurch wird die Ausschussrate bei der Produktion von Feingussteilen aus aushärtbaren Nickel-Basis-Legierungen drastisch reduziert.

Weitere vorteilhafte Ausgestaltungen der Erfindung ergeben sich aus den Unteransprüchen.

### Kurze Beschreibung der Zeichnung

In der Zeichnung ist ein Ausführungsbeispiel der Erfindung schematisch dargestellt.
Es zeigen:
- Fig. 1: einen Teillängsschnitt durch eine geschweisste Probe;
- Fig. 2: das Detail II aus Fig. 1.

Es sind nur die für das Verständnis der Erfindung wesentlichen Elemente gezeigt.

### Weg zur Ausführung der Erfindung

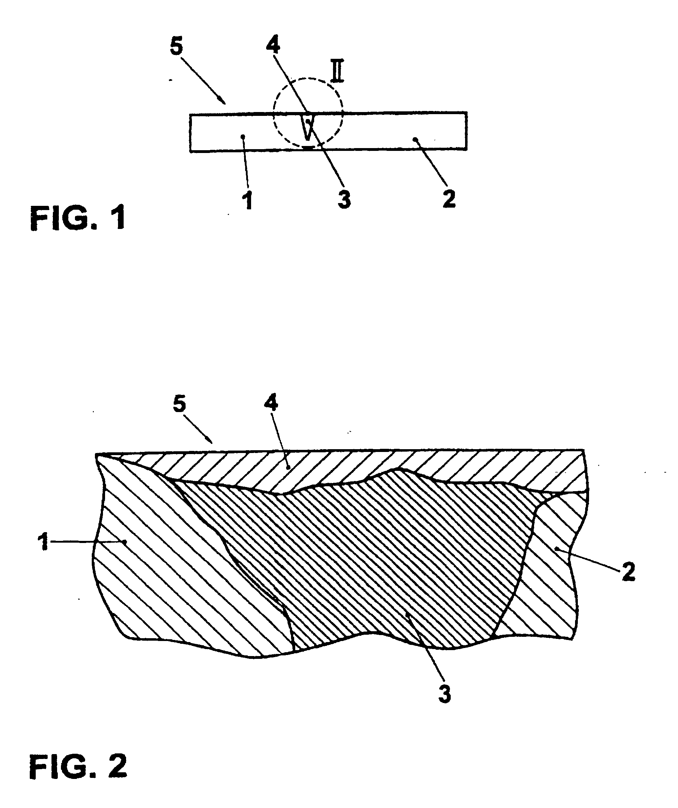

Nach Fig. 1 und 2 werden zwei Teile 1 und 2 aus dem gleichen Grundmaterial, hier IN738LC, mittels Wolfram-Inertgas-Schweissen (TIG) miteinander verschweisst und ein Werkstück 5 erzeugt. Als Grundmaterial können alle für Schaufeln verwendbare aushärtbaren Guss- und Knetlegierungen auf Nickelbasis oder Nickel-Eisenbasis verwendet werden. Dabei wird zwischen einer WolframElektrode und dem Werkstück 1, 2 ein Lichtbogen erzeugt, der von einem Schutzstrom aus inertem Gas umgeben ist. Das bei der Schweissung zugegebene Zusatzmaterial kann von Hand oder maschinell von Rollen zugeführt werden. Hier besteht das Zusatzmaterial, mit dem das Schweissgut 3 erzeugt wird, aus artgleichem Material wie das Grundmaterial, weshalb das Schweissgut 3 in seiner Zusammensetzung dem Grundmaterial entspricht. Das Zusatzmaterial wird in kleinen Raupen aufgetragen, und grobe Fehler werden ausgeschliffen. Wenn das Schweissgut 3 fertig aufgetragen ist, wird mit einem duktilen Material, hier eine duktile Ni-Basislegierung, beispielsweise S-NiCr20Nb, IN617, IN600, Haynes 230, IN625, eine rundherum um das Schweissgut 3 gelegte Decklage 4 geschweisst.

Wichtig dabei ist, das die Decklage 4 das Schweissgut 3 dicht nach aussen abschliesst.

Anstelle der geschweissten Decklage 4 kann auch eine andere dichte Deckschicht 4 aufgebracht werden. Geeignet ist beispielsweise ein dichter Abschluss mit Lötauftrag mittels Paste oder Lötfolie, die eingesintert werden, z. B. Amdry 103. Auch eine Beschichtung, zum Beispiel mittels Plasmaspritzen oder HVOF (High Velocity Oxygen Fuel), kann diesen dichten Auftrag liefern.

Das Werkstück 5 wird nun in einen Ofen eingebracht und heissisostatisch gepresst (HIP). Die Parameter des HIP-Verfahrens sind dabei werkstoffabhängig und müssen so gewählt werden, dass Risse und geschlossene Poren im Schweissbereich vollständig weggebracht werden. Die dabei gewählte Temperatur liegt unterhalb des Schmelzpunktes der verwendeten Legierung. Im vorliegenden Beispiel wurde das Werkstück bei ungefähr 100 MPa (1000 bar) und 1180°C gehipt. Das Hipen kann beispielsweise auch bei 100 bis 170 MPa und 1080 bis 1260°C während 3 bis 4 Stunden erfolgen.

Danach wurde das Werkstück einer üblichen Wärmebehandlung unterzogen, wie es beispielsweise für Feingussteile angewendet wird, um die gewünschten Werkstoffeigenschaften des Werkstückes 5 zu erreichen.

Die Wärmebehandlung bestand aus einer Lösungsglühbehandlung bei 1120°C während 2 bis 2.5 Stunden, um die γ'-Phase weitgehend zu lösen, danach wurde das Werkstück mit 20 bis 70°C pro Minute abgekühlt und bei 850°C während 16 bis 20 Stunden ausgehärtet. Diese Parameter des Wärmebehandlungsverfahrens sind dabei werkstoffabhängig, weshalb für andere Werkstoffe diese Werte entsprechend angepasst werden müssen.

Nach dieser Wärmebehandlung wurde das Werkstück mechanisch und mikroskopisch untersucht. Dazu wurden Zugproben über die Schweissnaht erstellt und mit Zugproben verglichen, die vollständig aus dem Grundmaterial bestehen. Dabei ergab sich, dass die über die Schweissnaht erstellten Zugproben die gleiche Festigkeit aufwiesen wie die vollständig aus Grundmaterial bestehenden Zugproben. Auch die Gefügeuntersuchungen ergaben, dass das Schweissgut eine gleichmässige und mit dem Grundmaterial vergleichbare Mikrostruktur aufweist.

Je nach Einsatz des nach dem obigen Verfahren behandelten Werkstückes und je nach den Materialeigenschaften der duktilen Deckschicht, beispielsweise bezüglich Zunderbeständigkeit, kann die Deckschicht belassen oder sie muss weggeschliffen werden.

Dieses Verfahren kann auch zur Reperatur oder Verbindung von Feingussteilen verwendet werden, beispielsweise bei Turbinenschaufeln, wobei dann die Deckschicht üblicherweise entfernt wird.

### Bezugszeichenliste

- 1: Grundmaterial
- 2: Grundmaterial
- 3: Schweissgut
- 4: Deckschicht
- 5: Werkstück

## Patentansprüche

1. Verfahren zum Schweissen von aushärtbaren Nickel-Basis-Legierungen (1, 2), wobei ein Werkstück (5) aus der aushärtbaren Nickel-Basis-Legierung (1, 2) mit artgleichem Zusatzmaterial geschweisst wird und das Werkstück (5) heissisostatisch (HIP) gepresst wird,
**dadurch gekennzeichnet,**
**dass** das beim Schweissen entstandene Schweissgut (3) vor dem heissisostatischen Pressen durch eine dichte Deckschicht (4) aus einem duktilen Material abgedeckt wird, wobei als Deckschicht (4) entweder eine geschweisste Decklage aus einer duktilen Nickel-Basis-Legierung oder ein Lotauftrag bzw. ein Auftrag durch thermisches Spritzen aufgebracht wird.

2. Verfahren nach Anspruch 1,
**dadurch gekennzeichnet,**
**dass** das Werkstück (5) unterhalb des Schmelzpunktes bei 100 bis 170 MPa heissisostatisch (HIP) gepresst wird.

3. Verfahren nach einem der Ansprüche 1 bis 2,
**dadurch gekennzeichnet,**
**dass** das Werkstück (5) nach dem Heiss-Isostatisch-Pressen einer Wärmebehandlung, bestehend aus Lösungsglühen und Aushärten, unterzogen wird.

4. Verfahren nach einem der Ansprüche 1 bis 3,
**dadurch gekennzeichnet,**
**dass** die duktile Deckschicht (4) vor der Verwendung des Werkstückes (5) entfernt wird.

5. Anwendung des Verfahrens nach einem der Ansprüche 1 bis 4 für Feingussteile aus aushärtbaren Nickel-Basis-Legierungen.

## Claims

1. Method for welding age-hardenable nickel-base alloys (1, 2), a workpiece (5) made of the age-hardenable nickel-base alloy (1, 2) being welded with filler material of the same composition as the base material and the workpiece (5) being subjected to hot isostatic pressing (HIP), **characterized in that** the weld metal (3) formed during welding is covered by a sealed covering layer (4) of a ductile material before the hot isostatic pressing is carried out, either a welded cover pass comprising a ductile nickel-base alloy or an application of solder or an application applied by thermal spraying being used as the covering layer (4).

2. Method according to Claim 1, **characterized in that** the workpiece (5) is subjected to hot isostatic pressing (HIP) at below the melting point and at 100 to 170 MPa.

3. Method according to either of Claims 1 and 2, **characterized in that** the workpiece (5) is subjected to a heat treatment, comprising solution-annealing and age-hardening, after the hot isostatic pressing.

4. Method according to one of Claims 1 to 3, **characterized in that** the ductile covering layer (4) is removed before the workpiece (5) is used.

5. Use of the method according to one of Claims 1 to 4 for precision castings made from age-hardenable nickel-base alloys.

## Revendications

1. Procédé de soudage d'alliages de nickel durcissables (1, 2), dans lequel une pièce (5) fabriquée à partir de l'alliage de nickel durcissable (1, 2) est soudée à un matériau d'apport de même type et la pièce (5) est pressée par compression isostatique à température élevée (HIP),
**caractérisé en ce que**
le produit de soudage (3) créé lors du soudage est recouvert avant la compression isostatique à température élevée par une couche de recouvrement dense (4) en un matériau ductile, soit une couche de recouvrement soudée en alliage de nickel ductile, soit une couche de brasage ou une couche appliquée par pulvérisation thermique étant appliquée en tant que couche de recouvrement (4).

2. Procédé selon la revendication 1,
**caractérisé en ce que**
la pièce (5) est soumise à une compression isostatique à température élevée (HIP) en dessous du point de fusion à 100 à 170 MPa.

3. Procédé selon l'une quelconque des revendications 1 à 2,
**caractérisé en ce que**
la pièce (5) est soumise après la compression isostatique à température élevée à un traitement thermique, se composant de recuit de mise en solution et de durcissement.

4. Procédé selon l'une quelconque des revendications 1 à 3,
**caractérisé en ce que**
la couche de recouvrement ductile (4) est enlevée avant l'utilisation de la pièce (5).

5. Application d'un procédé selon l'une quelconque des revendications 1 à 4, pour des pièces coulées de précision en alliages de nickel durcissables.
